# EUROPEAN PATENT SPECIFICATION

(11) **EP 2 711 341 B1**
(45) Date of publication and mention of the grant of the patent: **19.06.2019**
(21) Application number: 12785227.5
(22) Date of filing: 05.04.2012
(51) Int. Cl.: C02F 1/467, B63B 13/00, C25B 9/00, C02F 1/461

(54) **ELECTROLYZER STRUCTURE OF ELECTROLYSIS DEVICE**
ELEKTROLYSEURSTRUKTUR FÜR EINE ELEKTROLYSEVORRICHTUNG
STRUCTURE D'ÉLECTROLYSEUR D'UN DISPOSITIF D'ÉLECTROLYSE

(30) Priority: 18.05.2011 KR 20110047007
(43) Date of publication of application: 26.03.2014
(73) Proprietor: Hyundai Heavy Industries Co., Ltd, Ulsan 682-792 (KR)
(72) Inventor: JEONG, Gil-Ju, Ulsan 682-809 (KR); LEE, Ji-Hyoung, Ulsan 682-808 (KR); KIM, Yang-Gyu, Ulsan 681-800 (KR); LEE, Tae-Jin, Yongin-si Gyeonggi-do 448-537 (KR); HAN, Ki-Hoon, Ulsan 682-761 (KR)
(74) Representative: Michalski Hüttermann & Partner Patentanwälte mbB
(86) International application number: PCT/KR2012/002554
(87) International publication number: WO 2012/157847

(56) References cited:
- WO-A1-00/34184
- JP-A- S5 576 085
- JP-A- 2002 307 070
- JP-A- 2005 219 046
- KR-A- 19980 034 458
- KR-A- 20120 108 461
- US-A- 3 480 529
- US-A- 3 925 176
- US-A1- 2006 283 718
- US-A1- 2008 258 080

## Description

### BACKGROUND OF THE INVENTION

### Field of the Invention

The present invention relates to an electrolyzer structure for electrolysis apparatus and, more particularly, to an electrolyzer structure for electrolysis apparatus that is designed to prevent deterioration in the performance of electrodes possibly caused by scales and the contact with hydrogen.

### Background Art

WO 00/34184 refers to an electro purification of contaminated aqueous media, such as ground water and wastewater from industrial manufacturing facilities like paper mills, food processing plants and textile mills, is readily purified, decolorized and sterilized by improved, more economic open configuration electrolysis cell designs with electrodes comprising a plurality of conductive porous elements in electrical contact with one another. The cells may be divided or undivided, and connected in mono polar or bipolar configuration. When coupled with very narrow capillary gap electrodes more economic operation, particularly when treating solutions of relatively low conductivity is assured. The novel cell design is also useful in the electro synthesis of chemicals, both organic and inorganic types, such as hypochlorite bleaches and other oxygenated species.

US 3 925 176 A refers to a water purification apparatus and method. In a specific embodiment, domestic sewage (exemplary of water from municipal, domestic or industrial sources which may be processed with the invention) is purified by passing the sewage through a hydraulic macerator to reduce mechanically the size of solid waste products entering the system, and to aerate the waste. The macerated sewage may then be passed through an electrolytic cell having a plurality of spaced metal electrodes. Within the cell, electrolysis of the sewage produces oxidizing agents effective to kill harmful bacteria and other microorganisms. The electrolysis converts the sewage into a form which is essentially free of the usual pathogenic fecal organisms including Escherichia coli, Staphylococcus sp., Bacillus sp., other coliforms, Saccharomyces, various molds and other fungi.

US 3 480 529 A refers to an electro-chemical method for selected dissociation.

JP 2005 219046 A refers to a liquid quantity control unit of a solution capable of electrically controlling the concentration or presence ratio of ions present in the solution to control the liquid quantity with high precision by a relatively simple device.

JP55076085A discloses an apparatus for electrolyzing brine or sea water in which electrolytic cells are connected in series. Hydrogen produced in each electrolytic cell is drawn out into a gas discharge pipe.

Marine cargo vessels, which take up over 80 % of the worldwide cargo shipping, are run with sea water filled in a ballast tank in order for the propeller and the rudder to operate with efficiency, keep in balance, and secure higher stability in water in the case of having an insufficient load of freights. The water filled in the ballast tank is generally called "ballast water".

Being a weight water used to control the draft of a ship's hull and trim (the difference between forward and aft drafts), the ballast water serves to maintain the balance of the ship and enhance the stability and exerts an auxiliary function to help the propeller and the rudder running effectively in water.

The ballast water has been used since the late of the 1870's with an advent of the ships built with steel materials. Depending on the type of the ship, in some cases, ore or sand may also be used as a ballast material in place of the ballast water. Even though, sea water or fresh water is generally used as the ballast water.

On the other hand, the ballast water contains a variety of water lives and goes to the ballast tank of a ship, as it is sea water or fresh water collected from harbors, waterways or oceans.

The intake and discharge of the ballast water may vary according to the industrial development, resource endowment or the like of the destination country as a port of call. As for oil tankers or bulk carriers that have to load a vast amount of ballast water due to the nature of their work, they have more risks of being exposed to all kinds of pathogenic bacteria or foreign marine lives in oil-producing countries or exporting countries of raw materials than in importing countries.

The most significant problem with the ballast water is that the ballast water can be basically used as a medium through which foreign marine lives propagate. In other words, the water lives or pathogenic bacteria living in a specific sea area can be transferred to another sea area by the ship carrying the ballast water containing them. This leads to destabilization of the environment and ecosystem in the sea area.

Thus, there have recently been developed different treatment methods and apparatus for ballast water, among which an apparatus for treating ballast water through electrolysis is being actively studied.

Such an electrolysis-based treatment apparatus for ballast water is an apparatus for killing lives contained in the ballast water using gaseous chlorine or hypochlorite (HClO) generated by electrolysis in the ship.

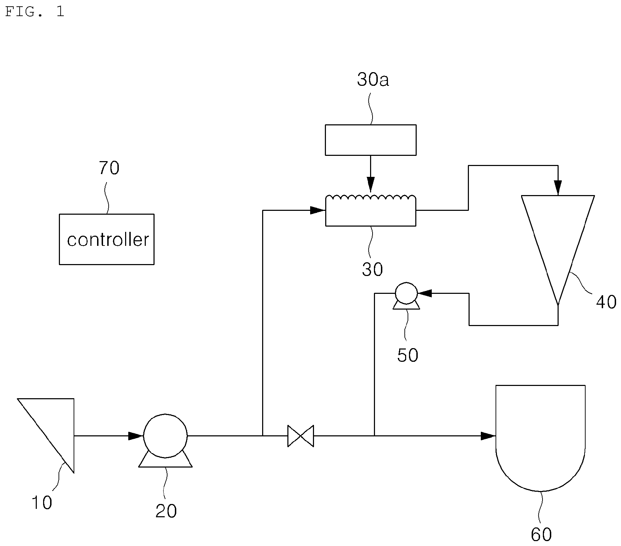

FIG. 1 is an illustration of an apparatus for treating ballast water, which apparatus includes: a ballast water pump 20 for supplying sea water entering an inlet opening 10 to an electrolysis apparatus 30 and a ballast water tank 60; the electrolysis apparatus 30 for converting the sea water into electrolyte water through electrolysis and then supplying the electrolyte water to a gas isolator; a power supply 30a for supplying electric current to the electrolysis apparatus 30; the gas isolator 40 for separating gaseous hydrogen and hypochlorite from the electrolyte water generated from the electrolysis apparatus 30; an electrolyte injection pump 50 for injecting the hypochlorite concentrate isolated by the gas isolator 40 into the ballast water tank 60; and a controller 70 for controlling the drives of the individual components.

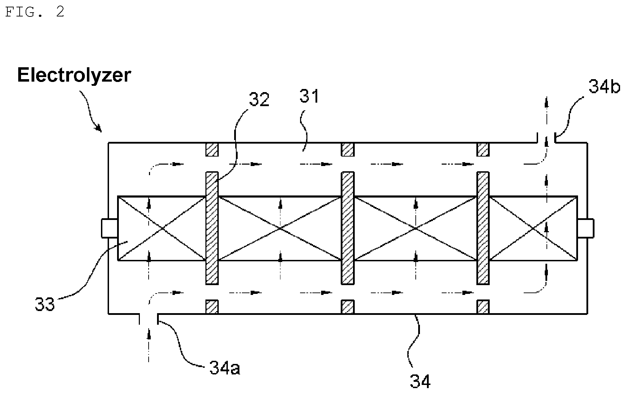

The electrolyzer of the electrolysis apparatus 30 can be described as follows with reference to FIG. 2.

The conventional electrolyzer of the electrolysis apparatus 30 as illustrated in FIG. 2 consists of an electrode separator 32 for partitioning the electrolyzer into electrode chambers 31 each having anode and cathode to flow electricity out; and a case 34 for holding electrodes 33 and the electrode separator 32.

An inlet opening 34a is formed in the bottom portion on the one side of the electrolyzer, and an outlet opening 34b is formed on the top portion on the other side to discharge hypochlorite generated by electrolysis.

In the conventional electrolyzer of the electrolysis apparatus 30, as shown in FIG. 2, sea water is fed into the electrolyzer through the inlet opening 34a, entering each electrode chamber 31 through the hole that goes all the way through the lower part of the electrode separator 32, and then flowing upward to undergo electrolysis and generate hypochlorite. The hypochlorite together with the gaseous hydrogen generated in the hydrolysis process is discharged from the outlet opening 34b through the hole that goes all the way through the upper part of the electrode separator 32 and then stored in a gas isolator (not shown).

The electrode separator 32 in the above-constructed conventional electrolyzer of the electrolysis apparatus 30 has through holes on its upper and lower parts through which the individual electrode chambers 31 are connected to one another. Thus, the sea water flows into the respective electrode chambers 31 via the through holes formed in the lower part of the electrolyzer 32 and passes the electrode 33 in the upper part of the electrolyzer 32 to undergo electrolysis.

The products of the electrolysis, that is, hypochlorite and gaseous hydrogen go through the through holes formed on the upper part of the electrode separator 32, enter the respective electrode chambers 31 and then exit the outlet opening 34b.

However, the conventional electrolyzer structure of the electrolysis apparatus 30 with such a construction has some problems as follows.

As the sea water in the electrolyzer is divided into the respective electrode chamber 31, the speed of flow in the electrolyzer reduces with an increase in the number of the electrode chambers 31. This deteriorates the effect of stripping scales generated from the electrode according to the speed of flow, thereby decreasing the electric current efficiency resulting from the scale formation.

Further, a flow passage for sea water, hypochlorite, and gaseous hydrogen is formed along the upper and lower through holes of the electrode separator 32. This results in insufficient partition between the electrode chambers 31 to form a lot of bypass current between the electrode chambers 31 and cause a current loss. Such a current loss reduces the yield of hypochlorite per unit power and increases the consumption of electric energy.

Besides, an insufficient discharge of the gaseous hydrogen causes the hydrogen to form a layer on the electrode 33 and increase the resistance, which does not only increase the voltage on the electrode 33 but also lowers the current efficiency, consequently with unnecessary consumption of electric energy.

To solve this problem, a separate hydrogen isolating device is placed in each electrode chamber 31 of the electrolyzer, yet not preventing the increasing tendency of the scale production rate caused by the reduction of the speed of flow according to the division of the flow.

In addition, arranging the electrode chambers in series may reduce the effect of the scale attachment rate, but it inevitably needs the electrolyzer to be longer.

This adds up to a limitation in the inner space of the ship for mounting the electrolyzer.

### SUMMARY OF THE INVENTION

The present invention in a first solution according to claim 1 is devised to solve the problems with the prior art, and its object is to provide an electrolyzer structure for electrolysis apparatus that has a plurality of transport pipes stacked in series on top of one another to prevent a decrease in the flow speed of the fluid, and an orifice hole formed on either side of the flow passage in a staggered manner to induce the upward flow of the hydrogen generated in the electrolysis process without passing the next electrode, thereby preventing deterioration in the electrode performance possibly caused by the contact between the electrode and the hydrogen and providing a solution to the problem in regards to the limited amounting space.

In an example to achieve the object of the present invention, there is provided an electrolyzer structure for electrolysis apparatus that includes: an inlet opening and an outlet opening formed on bottom and top portions on the one side thereof, respectively; a plurality of transport pipes stacked in series on top of one another to form a one-way flow passage in a zigzag pattern; and an electrode placed in each transport pipe to cause an electrical reaction of ballast water flowing into the transport pipe, where both end portions of the stacked transport pipes are alternately closed down and up, the closed portion having an orifice hole going all the way up to the upper adjacent transport pipe, so that the hydrogen generated in the electrolysis process can flow upward through the orifice hole, wherein the transport pipes comprise:
a plurality of branch pipes placed on either side of the transport pipe and stacked on top of one another; and a main pipe provided to connect the branch pipes together, wherein a cut-off plate having the orifice hole is disposed between one branch pipe and an upper adjacent branch pipe thereof, the cut-off plate being placed on the branch pipes on either side of the transport pipe in a staggered manner.

The transport pipes include : a plurality of branch pipes placed on either side of the transport pipe and stacked on top of one another; and a main pipe provided to connect the branch pipes together. Further, a cut-off plate having an orifice hole is disposed between one branch pipe and an upper adjacent branch pipe thereof. The cut-off plate is placed on the branch pipes on either side in a staggered manner.

In another example to achieve the object of the present invention, there is provided an electrolyzer structure for electrolysis apparatus that includes: an inlet opening and an outlet opening formed on bottom and top portions on the one side thereof, respectively; a plurality of transport pipes stacked in series on top of one another and arranged on front and rear sides to form a one-way flow passage; and an electrode placed in each transport pipe to cause an electrical reaction of ballast water flowing into the transport pipe, where each transport pipe includes a branch pipe on either side for providing a three-way flow passage and a main pipe for connecting two opposing branch pipes together. Further, a cut-off plate is disposed between the stacked branch pipes to form a one-way flow passage from the inlet opening to the outlet opening. The cut-off plate has an orifice hole so that the hydrogen generated in the electrolysis process can flow upward through the orifice hole.

The electrolyzer structure for electrolysis apparatus according to the present invention has the effects as follows.

Firstly, a plurality of flow passages are stacked on top of one another and arranged in series to prevent a decrease in the flow speed of the fluid.

Thus, there remains no scale formed by the reduced speed of flow, thus avoiding deterioration in the energy efficiency of the electrodes placed in the flow passages and the performance of the electrolyzer.

Secondly, cut-off plates for providing a zigzag flow passage are placed on the branch pipes on either side in a staggered manner, and the branch pipes are stacked on top of one another on either side. In this regard, each cut-off plate has an orifice hole, which goes all the way up to the upper adjacent branch pipe so that the hydrogen generated in the electrolysis process can flow upward through the orifice hole.

In other words, the fluid passes the electrode along the zigzag flow passage, while the hydrogen is exhausted directly into the upper branch pipe without passing the electrode. This prevents deterioration in the performance of the electrode possibly caused by the contact between the electrode and hydrogen.

### BRIEF DESCRIPTION OF THE DRAWINGS

FIG. 1 is a schematic block diagram showing a general treatment apparatus for ballast water.
FIG. 2 is a schematic diagram showing the flow of sea water fed into a conventional electrolyzer for electrolysis apparatus.
FIG. 3 is a perspective view showing the construction of an electrolyzer for electrolysis apparatus according to a preferred embodiment of the present invention.
FIG. 4 is an exploded perspective showing the portion "A" of FIG. 3.
FIG. 5 is a cross-sectional view showing the flow of hydrogen and sea water fed into the electrolyzer for electrolysis apparatus according to the preferred embodiment of the present invention.
FIG. 6 is a perspective view showing the construction of an electrolyzer for electrolysis apparatus according to another preferred embodiment of the present invention.

### DETAILED DESCRIPTION OF THE PREFERRED EMBODIMENT

It should be understood that the terms used in the specification and the appended claims should not be construed as limited to general and dictionary meanings, but interpreted based on the meanings and concepts corresponding to technical aspects of the present invention.

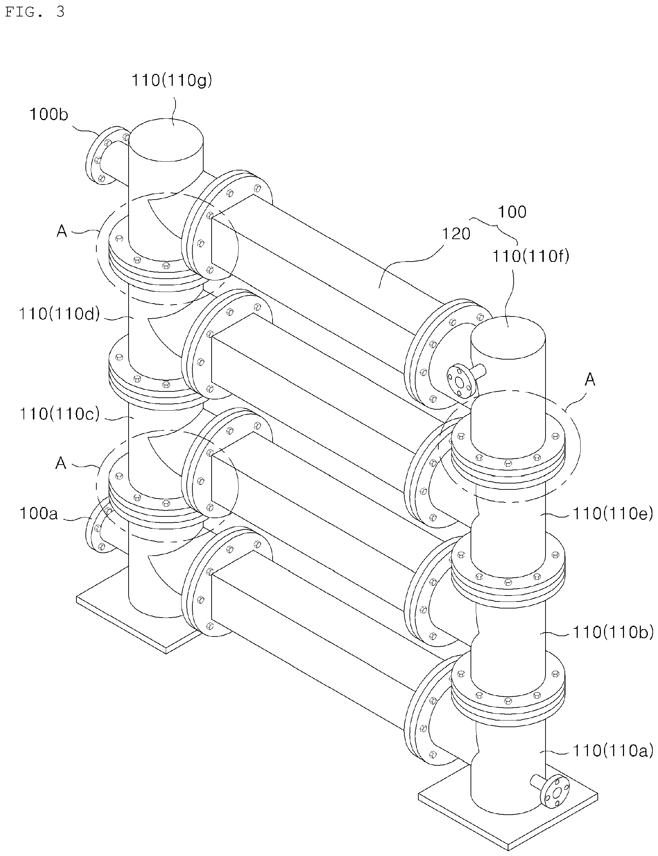

Hereinafter, a description will be given as to an electrolyzer structure for electrolysis apparatus according to a preferred embodiment of the present invention with reference to FIGS. 3, 4 and 5.

The electrolysis apparatus is used to electrolyze sea water and generate hypochlorite.

In the electrolysis apparatus, the electrolyzer which the sea water enters consists of, as shown in FIG. 3, a plurality of transport pipes 100 stacked on top of one another.

Because the plural transport pipes 100 are arranged in series, the electrolyzer has an inlet opening 100a on the bottom portion on the one side to provide an intake for sea water, and an outlet opening 100b on the top portion on the other side to discharge the electrolyzed sea water.

The flow passage of the transport pipes 100 is formed in a zigzag pattern, as described later in detail.

Each transport pipe 100 consists of a branch pipe 110 and a main pipe 120.

The branch pipe 110 is to change the flow direction of the fluid. A plurality of branch pipes 110 are provided on either side of the transport pipe 100 and stacked on top of one another.

The branch pipes 110 are T-shaped. The branch pipe 110 on the one side of the transport pipe 100 is placed opposite to the branch pipe 110 on the other side.

The main pipe 120 provides a linear flow passage for the fluid and connects the two opposing branch pipes 110 together.

Inside the main pipe 120 is placed an electrode (not shown) in the lengthwise direction to electrolyze the sea water.

On the other hand, a cut-off plate 130 is provided between the two adjacent branch pipes 110 stacked on top of one the other. The cut-off plate 130 is placed between the branch pipes 110 alternately from bottom to top.

The cut-off plate 130 forms the flow passage in a zigzag pattern in the electrolyzer by intentionally cutting off the flow passage between the two adjacent branch pipes 110 stacked on top of one the other.

The cut-off plate 130 is placed in the portion "A" of FIG. 3.

In other words, with the cut-off plates, the branch pipes 110 stacked on top of one another on the one side (that is, on the left side of the drawing) provide a flow passage in the closed-open-closed pattern from bottom to top, while the branch pipes 110 stacked on top of one another on the other side provide a flow passage in the open-closed-open pattern from bottom to top.

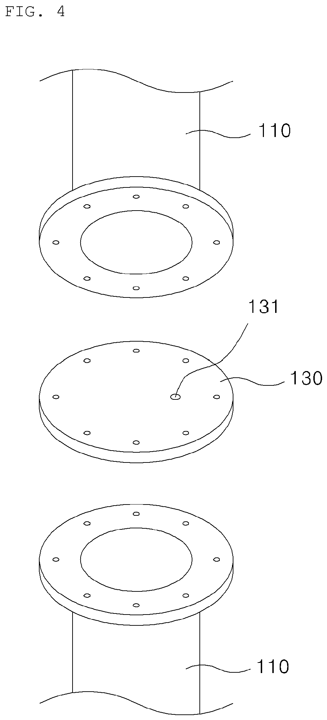

As shown in FIG. 4, the cut-off plate 130 has an orifice hole 131.

The orifice hole 131 is a passage through which the hydrogen generated from the sea water during the electrolysis process can be exhausted from one branch pipe 110 directly to the upper adjacent branch pipe 110 without passing the electrode of the main pipe 120.

As the orifice hole 131 keeps the hydrogen from entering the main pipe 120 having an electrode, it can prevent deterioration in performance of the electrode possibly caused by the contact between the electrode and the hydrogen.

The uppermost branch pipe 110 has an exhaust pipe 140 through which the hydrogen is lastly let out.

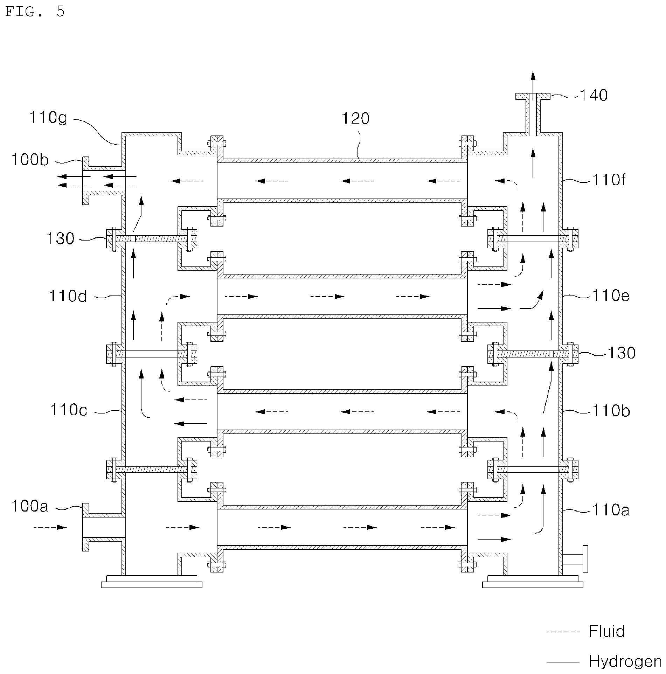

Hereinafter, reference will be made to FIG. 5 to describe the flow of a fluid in the above-constructed electrolyzer.

The sea water entering the electrolyzer through the inlet opening 100a on the one side (that is, the left side of the drawing) passes the main pipe 120 and undergoes electrolysis via the electrode mounted in the main pipe 120.

The electrolysis of the sea water forms hypochlorite and hydrogen.

Then, electrolyte that is the electrolyzed sea water flows from the branch pipe 110a on the other side (that is, the left side of the drawing) up to the upper adjacent branch pipe 110b. As the cut-off plate 130 closes the upward flow passage from the branch pipe 110b, the electrolyte is directed to the branch pipe 110c on the one side.

While the flow is turning from the other side to the one side, the gaseous hydrogen undergoes gas-liquid separation and directly goes out to the upper adjacent branch pipe 110e through the orifice hole 131 of the cut-off plate 130.

In other words, as can be seen in FIG. 5, the hydrogen does not pass through the main pipe 120 together with the electrolyte but directly goes out to the upper branch pipe 110e.

The electrolyte transported from the other side to the one side passes through the main pipe 120 to undergo a second electrolysis via the electrode.

The electrolysis produces hydrogen again. The electrolyte together with the hydrogen after electrolysis flows up to the upper adjacent branch pipe 110d. As the cut-off plate 130 closes the upward flow passage from the branch pipe 110d, the electrolyte is directed to the branch pipe 110e on the other side through the main pipe 120.

In the meantime, the hydrogen does not pass through the main pipe 120 together with the electrolyte but directly goes out to the upper adjacent branch pipe 110g through the orifice hole 131 of the cut-off plate 130. The hydrogen is then discharged to the gas isolator (not shown) through the exhaust pipe 140 formed on the branch pipe 110g.

On the other hand, the electrolyte transported from the branch pipe 110d on the one side to the branch pipe 110e on the other side through the main pipe 120 flows up to the upper branch pipe 110f together with the hydrogen exhausted from the lower adjacent branch pipe 110b. The electrolyte further goes to the branch pipe 110g on the one side through the main pipe 120 and exits the branch pipe 110g through the outlet opening 100b.

In the meanwhile, the hydrogen transported to the branch pipe 110f does not flow to the branch pipe 110g on the one side through the main pipe 120 but goes out through the exhaust pipe 140 formed on the branch pipe 110f.

As described above, the electrolyzer consisting of a plurality of transport pipes 100 stacked in series on top of one another is constructed to direct the fluid from bottom to top in a zigzag manner.

Accordingly, the electrolyzer has such a technical characteristic to discharge the fluid at a constant speed of flow without generating scales on the pipes or electrodes.

Further, the cut-off plates are provided on the close portion of the branch pipes 110 on either side alternately to change the flow of the fluid in a zigzag pattern. In this regard, the cut-off plates 130 are arranged in a staggered manner on the branch pipes 110 provided on either side, each cut-off plate 130 having the orifice hole 131.

With such a construction, the hydrogen generated in the electrolysis process does not flow together with the fluid in a zigzag fashion along the main pipe 120 but directly goes out through the orifice hole 131 without passing through the main pipe 121.

Therefore, the electrode mounted in the main pipe 120 has a least contact with the hydrogen, minimizing the formation of a hydrogen layer on the electrode and thus preventing deterioration in the performance of the electrode or an increase of the energy consumption caused by a rise of voltage.

Even though the preferred embodiment of the present invention exemplifies the transport pipes stacked in series on top of one another, the transport pipes may also be arranged on front and rear sides and stacked on top of one another.

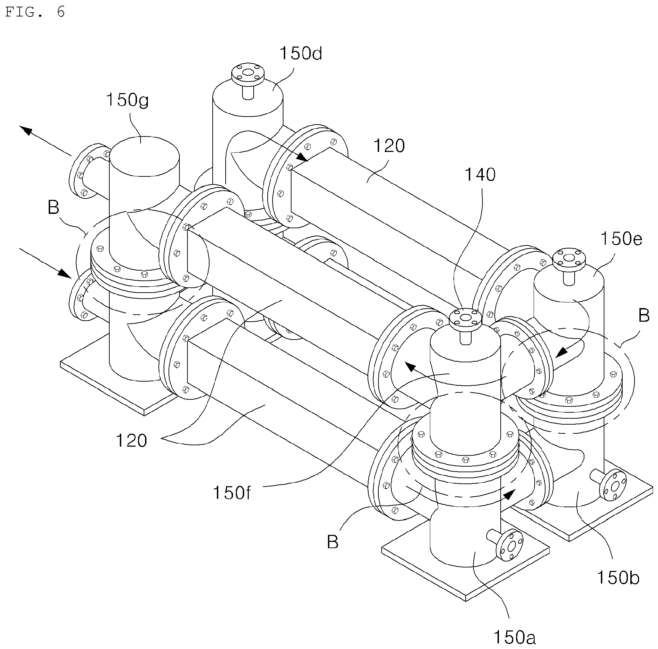

This arrangement of the transport pipes can be described according to another embodiment of the present invention with reference to FIG. 6.

In the specification, the same reference numbers may be used to denote similar components in various embodiments of the present invention without further explanation.

As shown in FIG. 6, transport pipes 100 are stacked on top of one another and arranged on front and rear sides.

Each transport pipe 100 consists of a branch pipe 150 and a main pipe 120.

The branch pipe 110 provides a flow passage for changing the direction of the flow. A plurality of branch pipes 110 are provided on either side of the transport pipe 100.

Unlike the case of the preferred embodiment, the branch pipes 110 form a three-way flow passage.

In contrast to the two-way flow passage (i.e., left-and-right direction and up-and-down direction) of the transport pipes 100 in the preferred embodiment, there is formed a three-way flow passage: left-and-right direction, up-and-down direction, and front-and-rear direction.

As a result, the transport pipes 100 may be arranged in left-and-right direction, up-and-down direction, and front-and-rear direction.

The main pipe 120 connects two opposing branch pipes 150 on either side together. Inside the main pipe 120 is placed an electrode.

Such an electrolyzer structure also has a serial component arrangement to form a one-way flow passage.

In other words, inlet opening 100a and outlet opening 100b are formed in the bottom and top portions on the one side, respectively. Between the branch pipes 150 is provided a cut-off plate 130 in order to form a one-way flow passage from inlet opening 100a to outlet opening 100b.

As the inlet opening 100a is formed in the bottom portion, the fluid flows in the bottom-to-top direction of the electrolyzer.

The cut-off plate 130 is provided to keep the fluid from moving to the top portion of the electrolyzer while the fluid is flowing through the branch pipes 150 and the main pipe 120 arranged in the bottom portion. For better understanding, the cut-off plate 130 is shown in the portion "B" only.

The cut-off plate 130 has an orifice hole 131, which goes all the way to the upper adjacent branch pipe 150.

The uppermost branch pipe 150 has an exhaust pipe 140 for the final hydrogen discharge.

Hereinafter, a description will be given as to the flow in the above-constructed electrolyzer according to another embodiment of the present invention.

The sea water entering the electrolyzer through the inlet opening 100a on the one side (that is, the left side of the drawing) moves to the main pipe 120 and undergoes electrolysis through the electrode mounted provided in the main pipe 120.

The electrolysis of the sea water results in production of hypochlorite and hydrogen.

As the cut-off plate 130 closes the upward flow passage, the electrolyte that is the electrolyzed sea water is directed to the rear branch pipe 150b.

While the flow is turning from front to rear side, the gaseous hydrogen undergoes gas-liquid separation and directly passes out to the upper adjacent branch pipe 150f through the orifice hole 131 of the cut-off plate 130.

Subsequently, the hydrogen is discharged through the exhaust pipe 140.

On the other hand, the electrolyte transported to the rear branch pipe 150b enters the branch pipe 150c on the one side through the main pipe 120. In the meanwhile, electrolysis takes place again to generate hydrogen.

The electrolyte together with the hydrogen generated from the electrolysis flows to the upper branch pipe 150d. The hydrogen exits the branch pipe 150d through the exhaust pipe 140, while the electrolyte flows into the branch pipe 150e on the other side through the main pipe 120.

The electrolyte transported to the other side flows into the front branch pipe 150f, turns to the branch pipe 150g on the one side and then exits the branch pipe 150g through the outlet opening 100b.

With this construction according to another embodiment of the present invention, the hydrogen generated in the electrolysis process together with the fluid does not pass through the main pipe 120 but directly flows upward through the orifice hole 131.

Therefore, the electrode mounted in the main pipe 120 has a least contact with the hydrogen, minimizing the formation of a hydrogen layer on the electrode and thus preventing deterioration in the performance of the electrode or an increase of the energy consumption caused by a rise of voltage.

The above description of the present invention is provided in detail for the purpose of illustration of the embodiments disclosed herein.
100: transport pipe
100a: inlet opening
100b: outlet opening
110 (110a - 110g): branch pipe
120: main pipe
130: cut-off plate
131: orifice hole
140: exhaust pipe
150 (150a - 150g): branch pipe

## Claims

1. An electrolyzer structure for electrolysis apparatus, comprising:
an inlet opening (100a) and an outlet opening (100b) formed on bottom and top portions on one side thereof, respectively;
a plurality of transport pipes (100) stacked in series on top of one another to form a one-way flow passage in a zigzag pattern; and
an electrode placed in each transport pipe (100) to cause an electrical reaction of ballast water flowing into the transport pipe (100),
wherein both end portions of the stacked transport pipes (100) are alternately closed down and up,
wherein the closed portion has an orifice hole (131) going all the way up to the upper adjacent transport pipe (100), so that the hydrogen generated in the electrolysis process can flow upward through the orifice hole (131), wherein the transport pipes (100) comprise:
a plurality of branch pipes (110) placed on either side of the transport pipe (100) and stacked on top of one another; and
a main pipe (120) connecting the branch pipes (110) together,
wherein a cut-off plate (130) having the orifice hole (131) is disposed between one branch pipe (110) and an upper adjacent branch pipe (110) thereof,
the cut-off plate (130) being placed on the branch pipes (110) on either side of the transport pipe (100) in a staggered manner.

2. An electrolyzer structure for electrolysis apparatus, comprising: an inlet opening (100a) and an outlet opening (100b) formed on bottom and top portions on one side thereof, respectively; a plurality of transport pipes (100) stacked in series on top of one another and arranged on front and rear sides to form a one-way flow passage; and an electrode placed in each transport pipe (100) to cause an electrical reaction of ballast water flowing into the transport pipe (100), wherein each transport pipe (100) comprises a branch pipe (150) on either side for providing a three-way flow passage, and a main pipe (120) connecting two opposing branch pipes (150) together, wherein a cut-off plate (B; 130) is disposed between the stacked branch pipes (150) to form a one-way flow passage from the inlet opening (100a) to the outlet opening (100b), the cut-off plate (B; 130) having an orifice hole (131) so that the hydrogen generated in the electrolysis process can flow upward through the orifice hole (131).

## Patentansprüche

1. Elektrolyseurstruktur für einen Elektrolyseapparat, umfassend:
eine Einlassöffnung (100a) und eine Auslassöffnung (100b), die an unteren beziehungsweise oberen Abschnitten an einer (einzelnen) Seite davon gebildet sind;
eine Vielzahl von Transportleitungen (100), die in Reihe aufeinander gestapelt sind, um einen Einwege-Durchflusskorridor in einem Zickzackmuster zu bilden; und
eine Elektrode, die in jeder Transportleitung (100) platziert ist, um eine elektrische Reaktion von Ballastwasser herbeizuführen, das in die Transportleitung (100) fließt,
wobei beide Endabschnitte der gestapelten Transportleitungen (100) alternierend nach unten und nach oben geschlossen sind,
wobei der geschlossene Abschnitt ein Durchlassloch (131) aufweist, das den gesamten Weg nach oben bis zu der oberen benachbarten Transportleitung (100) geht, so dass der in dem Elektrolyseprozess generierte Wasserstoff durch das Durchlassloch (131) hindurch aufwärts fließen kann, wobei die Transportleitungen (100) umfassen:
eine Vielzahl von Abzweigleitungen (110), die auf beiden Seiten der Transportleitung (100) platziert sind und aufeinander gestapelt sind; und
eine Hauptleitung (120), die die Abzweigleitungen (110) miteinander verbindet,
wobei eine Absperrplatte (130) mit dem Durchlassloch (131) zwischen einer Abzweigleitung (110) und einer oberen dazu benachbarten Abzweigleitung (110) angeordnet ist,
die Absperrplatte (130) auf den Abzweigleitungen (110) an beiden Seiten der Transportleitung (100) versetzt platziert ist.

2. Elektrolyseurstruktur für einen Elektrolyseapparat, umfassend:
eine Einlassöffnung (100a) und eine Auslassöffnung (100b), die an unteren beziehungsweise oberen Abschnitten an einer (einzelnen) Seite davon gebildet sind;
eine Vielzahl von Transportleitungen (100), die in Reihe aufeinander gestapelt sind und an vorderen und hinteren Seiten angeordnet sind, um einen Einwege-Durchflusskorridor zu bilden; und
eine Elektrode, die in jeder Transportleitung (100) platziert ist, um eine elektrische Reaktion von Ballastwasser herbeizuführen, das in die Transportleitung (100) fließt,
wobei jede Transportleitung (100) eine Abzweigleitung (150) auf beiden Seiten umfasst, um einen Dreiwege-Durchflusskorridor bereitzustellen, und
eine Hauptleitung (120), die zwei gegenüber liegende Abzweigleitungen (150) miteinander verbindet, wobei eine Absperrplatte (B; 130) zwischen den gestapelten Abzweigleitungen (150) angeordnet ist, um einen Einwege-Durchflusskorridor von der Einlassöffnung (100a) zu der Auslassöffnung (100b) zu bilden, wobei die Absperrplatte (B; 130) ein Durchlassloch (131) aufweist, so dass der in dem Elektrolyseprozess generierte Wasserstoff durch das Durchlassloch (131) hindurch aufwärts fließen kann.

## Revendications

1. Structure d'électrolyseur pour appareil d'électrolyse, comprenant :
une ouverture d'entrée (100a) et une ouverture de sortie (100b) formées sur des portions inférieure et supérieure sur un côté de celle-ci, respectivement ;
une pluralité de tuyaux de transport (100) empilés en série les uns sur les autres pour former un passage d'écoulement unidirectionnel en un motif de zigzag ; et
une électrode placée dans chaque tuyau de transport (100) pour causer une réaction électrique d'eau de ballastage s'écoulant dans le tuyau de transport (100),
dans laquelle les deux portions d'extrémité des tuyaux de transport empilés (100) sont fermées de façon alternée en bas et en haut,
dans laquelle la portion fermée a un trou d'orifice (131) allant tout au long du chemin jusqu'au tuyau de transport adjacent supérieur (100), pour que l'hydrogène généré dans le procédé d'électrolyse puisse s'écouler vers le haut à travers le trou d'orifice (131), dans laquelle les tuyaux de transport (100) comprennent :
une pluralité de tuyaux dérivés (110) placés de chaque côté du tuyau de transport (100) et empilés les uns sur les autres ; et
un tuyau principal (120) raccordant les tuyaux dérivés (110) ensemble,
dans laquelle une plaque de coupure (130) ayant le trou d'orifice (131) est disposée entre un tuyau dérivé (110) et un tuyau dérivé adjacent supérieur (110) de ceux-ci,
la plaque de coupure (130) étant placée sur les tuyaux dérivés (110) de chaque côté du tuyau de transport (100) de manière décalée.

2. Structure d'électrolyseur pour appareil d'électrolyse, comprenant : une ouverture d'entrée (100a) et une ouverture de sortie (100b) formées sur des portions inférieure et supérieure sur un côté de celle-ci, respectivement ; une pluralité de tuyaux de transport (100) empilés en série les uns sur les autres et agencés sur des côtés avant et arrière pour former un passage d'écoulement unidirectionnel ; et une électrode placée dans chaque tuyau de transport (100) pour causer une réaction électrique d'eau de ballastage s'écoulant dans le tuyau de transport (100), dans laquelle chaque tuyau de transport (100) comprend un tuyau dérivé (150) de chaque côté pour fournir un passage d'écoulement tridirectionnel, et un tuyau principal (120) raccordant deux tuyaux dérivés opposés (150) ensemble, dans laquelle une plaque de coupure (B ; 130) est disposée entre les tuyaux dérivés empilés (150) pour former un passage d'écoulement unidirectionnel depuis l'ouverture d'entrée (100a) jusqu'à l'ouverture de sortie (100b), la plaque de coupure (B ; 130) ayant un trou d'orifice (131) pour que l'hydrogène généré dans le procédé d'électrolyse puisse s'écouler vers le haut à travers le trou d'orifice (131).
